(19) **Europäisches Patentamt / European Patent Office / Office européen des brevets**

(11) **EP 3 655 264 B1**

(12) # FASCICULE DE BREVET EUROPEEN

(45) Date de publication et mention de la délivrance du brevet:
**15.09.2021 Bulletin 2021/37**

(21) Numéro de dépôt: **18752584.5**

(22) Date de dépôt: **17.07.2018**

(51) Int Cl.:
**B60C 15/00** (2006.01)       **B60C 15/024** (2006.01)
**B60C 9/02** (2006.01)

(86) Numéro de dépôt international:
**PCT/FR2018/051821**

(87) Numéro de publication internationale:
**WO 2019/016467 (24.01.2019 Gazette 2019/04)**

(54) **PNEUMATIQUE DONT LA ZONE DU BOURRELET EST ALLÉGÉE**

REIFEN MIT WULSTBEREICH MIT REDUZIERTEM GEWICHT

TYRE WITH A REDUCED-WEIGHT BEAD REGION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2017 FR 1756783**

(43) Date de publication de la demande:
**27.05.2020 Bulletin 2020/22**

(73) Titulaire: **Compagnie Générale des Etablissements Michelin**
**63000 Clermont-Ferrand (FR)**

(72) Inventeurs:
• **BESTGEN, Luc**
**63040 Clermont-Ferrand Cedex 9 (FR)**

• **LICENSE, William**
**63040 Clermont-Ferrand Cedex 9 (FR)**

(74) Mandataire: **Le Cam, Stéphane Georges Elie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 393 931    EP-A1- 2 949 483**
**FR-A1- 2 415 016**

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présent des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

Le document EP 1 393 931 A1 décrit un ancrage particulier d'une armature carcasse au niveau du bourrelet du pneumatique.

Les documents EP 2 949 483 A1 et FR 2 415 016 A1 décrivent des contours extérieurs de bourrelets de pneumatiques pour poids lourds selon des courbes présentant un point d'inflexion.

Les inventeurs se sont ainsi donnés pour mission de fournir des pneumatiques pour véhicules "Poids-Lourds", dont les performances d'endurance notamment l'endurance des zones des bourrelets sont conservées et dont la conception est simplifiée et avantageusement dont la masse globale du pneumatique est diminuée.

Ce but a été atteint selon l'invention par un pneumatique tel que défini dans la revendication indépendante 1. La présente invention concerne un pneumatique, monté sur une jante creuse de type 15° drop centre nominale et gonflé à sa pression nominale, comprenant une armature de carcasse radiale, constituée d'une unique couche d'armature de carcasse formée d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement de la couche d'armature de carcasse étant séparé de la partie principale de la couche d'armature de carcasse par une première couche de mélange(s) polymérique(s) s'étendant radialement depuis la tringle jusqu'au moins l'extrémité du retournement de la couche d'armature de carcasse, dans une coupe méridienne dudit pneumatique :

- le retournement de la couche d'armature de carcasse et la partie principale de la couche d'armature de carcasse étant les seules couches d'éléments de renforcement dont l'allongement à rupture est inférieur à 6 % présentes dans une zone du flanc constituant au moins 90% de la surface du flanc comprise radialement entre l'extrémité du retournement de la couche d'armature de carcasse et le point radialement le plus à l'extérieur de la tringle,
- la distance entre l'extrémité du retournement de la couche d'armature de carcasse et le point radialement le plus intérieur du cercle circonscrit à la tringle étant comprise entre 45 et 90% de la distance entre le point axialement le plus extérieur de la partie principale de la couche d'armature de carcasse et le point radialement le plus intérieur du cercle circonscrit à la tringle,
- radialement vers l'extérieur, à partir d'un point C du retournement de la couche d'armature de carcasse situé à une distance du point radialement le plus intérieur du cercle circonscrit à la tringle comprise entre 30 et 55% de la distance entre l'extrémité du retournement de la couche d'armature de carcasse et le point radialement le plus intérieur du cercle circonscrit à la tringle, le retournement de la couche d'armature de carcasse et la partie principale de la couche d'armature de carcasse étant couplés pour former une zone de couplage sur une longueur comprise entre 15 et 65% de la distance entre l'extrémité du retournement de la couche d'armature de carcasse et le point radialement le plus intérieur du cercle circonscrit à la tringle, pour être ensuite découplés par la première couche de mélange(s) po lymérique(s),
- tout point du profil de la surface extérieure S du pneumatique, entre un premier point F, lui-même défini par l'intersection d'une droite d'orientation axiale, passant par le point radialement le plus extérieur de la tringle et la surface extérieure du pneumatique, et un deuxième point E, qui est le point axialement le plus extérieur du pneumatique, étant à une distance inférieure à 2.5 mm d'une spline P reliant lesdits premier et deuxième points F et E,
- la direction de la tangente $T_{PF}$ de ladite spline P étant donnée par la droite passant par ledit premier point F et formant avec la direction radiale un angle $\alpha_F$ compris entre -3° et +3° et inférieur à l'angle formé par la droite [EF] et la direction radiale,
- la direction de la tangente $T_{PE}$ de ladite spline P étant donnée par la droite passant par ledit deuxième point E et formant avec la direction radiale un angle $\alpha_E$ compris entre 0° et +5° et inférieur à l'angle formé par la droite [EF] et la direction radiale,
- la tension ou facteur d'échelle $t_{Fp}$ sur la tangente $T_{PF}$, appartenant à l'intervalle [0.8, 1.3],
- la tension ou facteur d'échelle $t_{Ep}$ sur la tangente $T_{PE}$, appartenant à l'intervalle [1.5*$t_{Fp}$, 2.3*$t_{Fp}$],
- ladite spline P et la droite [EF] présentant un unique point d'intersection N, distinct des points E et F, ledit point d'intersection N étant radialement intérieur à l'unique point d'inflexion M de ladite spline P,
- l'unique point d'inflexion M de ladite spline P étant à une distance radiale du point F comprise entre 25 et 50 % de la distance radiale entre les points E et F,
- Au moins 95% des points de la spline P étant axialement intérieurs aux points d'une spline W définie entre les points E et I, ledit point I étant défini par le point de contact du pneumatique sur la jante J axialement le plus extérieur,
- la direction de la tangente $T_{WE}$ de ladite spline W étant donnée par la droite passant par ledit premier point E et formant avec la direction radiale un angle $\alpha_{WE}$ égal à 0°,
- la direction de la tangente $T_{WI}$ de ladite spline W étant donnée par la droite tangente au crochet de la jante J au point I,
- les tensions ou facteurs d'échelle $t_{Iw}$ et $t_{Ew}$ sur les tangentes $T_{WI}$ et $T_{WE}$ étant égales à 1,
- la distance axiale maximale entre la spline P et la spline W étant supérieure à 5% de la distance radiale entre les points E et F,
- la surface délimitée par la spline P, par la spline W, par la droite axiale passant par l'extrémité du retournement de la couche d'armature de carcasse et par la droite axiale passant par le point F étant supérieure à trois fois la surface d'un rectangle dont un côté est le segment reliant les points E et F, l'autre côté étant de longueur unitaire.

Au sens de l'invention, la longueur unitaire d'un côté du rectangle dont l'autre côté est le segment reliant les points E et F signifie que ladite longueur vaut un. La valeur numérique de la surface du rectangle est dès lors égale à la longueur du segment reliant les points E et F et l'unité de la surface est le carré de l'unité ayant servi à évaluer cette longueur.

Au sens de l'invention, une jante creuse de type 15° drop center ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

Au sens de l'invention, une spline reliant des points $p_1$ et $p_2$, deux tangentes $T_1$, $T_2$ à la spline faisant des angles $\alpha_1$ et $\alpha_2$ avec la direction radiale respectivement aux points $p_1$ et $p_2$ est une courbe paramétrée dont les coordonnées dans le repère direct d'origine $p_1$ et dont le premier axe est formé par la droite passant par les points $p_1$ et $p_2$ sont données par :

$$[ \text{K} * ( (-2u^3+3u^2) + t_1 * (u^3-2u^2+u)*\cos(\alpha_1) + t_2*(u^3-u^2)*\cos(\alpha_2) ) ,$$

$$\text{K} * ( t_1 * (u^3-2u^2+u)*\sin(\alpha_1) + t_2*(u^3-u^2)*\sin(\alpha_2) ) ]$$

avec u, abscisse curviligne relative, appartenant à l'intervalle [0, 1],
$t_1$, tension ou facteur d'échelle sur la tangente $T_1$, et
$t_2$, tension ou facteur d'échelle sur la tangente $T_2$.

L'approximation du profil extérieur par une spline est pertinent car il est connu de l'homme du métier que le profil extérieur d'un pneumatique monté et gonflé n'est pas constitué d'une suite de courbes simples tels que des arcs de cercles, la partie principale de la couche d'armature de carcasse s'orientant, dans le flanc du pneumatique, vers une courbe d'équilibre. Cette orientation vers une courbe d'équilibre est notamment décrite dans l'article « An improved method of using equilibrium profile to design radial tires, Journal of Advanced Mechanical Design, Systems, and Manufacturing, Vol.9, No.2, 2015.

Après avoir fixé les valeurs des paramètres t1, t2, $\alpha_1$ et $\alpha_2$, la spline au sens de l'invention peut être construite avec le logiciel Catia Version 5-6 Release 2016 Service Pack 4 de Dassault Systèmes, atelier Generative Shape Design, tel qu'expliqué dans la documentation du logiciel à la section expliquant comment créer une courbe en fonction de son équation.

Pour évaluer les distances maximales, on crée 10 points sur la génératrice et ensuite un paramètre Objectif égal à la distance maximale de ces points à la courbe P. On lance ensuite l'atelier « Product Engineering Optimizer » pour minimiser le paramètre Objectif par la méthode du recuit simulé (optimisation globale) en fonction des paramètres définissant la spline (t1, t2, $\alpha$1 et $\alpha$2). Comme valeur de départ, on peut prendre pour $\alpha$1 et a2 les angles des tangences du profil de la surface extérieure aux points p1 et p2 et le couple t1, t2 choisi parmi les valeurs 0.25, 0.5, 0.75, 1 qui permettent de s'approcher visuellement au mieux du profil de la surface extérieure du pneumatique.

Un autre exemple de méthode pour la construction des splines consiste à utiliser un code discrétisant la spline au sens de l'invention en fonction de ses paramètres (t1, t2, $\alpha_1$ et $\alpha_2$). Après avoir récupéré les coordonnées de dix points sur la génératrice, on écrit dans un langage de programmation évolué (C, Fortran, Java, Matlab,...) un code discrétisant la spline au sens de l'invention définie en fonction de ses paramètres (t1, t2, $\alpha_1$ et $\alpha_2$). On discrétise cette courbe en faisant varier le paramètre u avec une résolution autour de 10 points par mm. Pour chacun des dix points sur la génératrice, la distance à la courbe géométrique sera la plus petite distance entre ce point et l'ensemble des points discrétisés. On définit l'objectif comme étant le maximum des dix distances et on utilise une méthode d'optimisation globale pour minimiser l'objectif en fonction des paramètres. Comme méthode d'optimisation globale, la méthode du recuit simulé (S. Kirkpatrick, C. D. Gelatt and M. P. Vecchi, Optimization by Simulated Annealing, Science, vol. 220, pp. 671-680 (1983)) est particulièrement appropriée

Pour évaluer la distance maximale, il faut discrétiser la courbe extérieure du pneu en mille points et évaluer la distance entre ces points et la courbe construite.

La détermination des différents points et les mesures de distances ou de surface étant déterminées sur un pneumatique monté et gonflé selon les conditions nominales, elles peuvent par exemple être réalisées selon une technique de tomographie.

Au sens de l'invention, la couche d'armature de carcasse et le retournement d'armature de carcasse sont dits couplés si les éléments de renforcement respectifs de la couche d'armature de carcasse et du retournement d'armature de carcasse sont séparés par une épaisseur de mélange caoutchouteux sensiblement constante et d'au plus 5 mm sur une longueur supérieure à 15% de la distance entre l'extrémité du retournement de l'armature de carcasse et le point radialement le plus intérieur du cercle circonscrit à la tringle. L'épaisseur de mélange caoutchouteux séparant les éléments de renforcement respectifs de la couche d'armature de carcasse et du retournement d'armature de carcasse est mesurée selon la direction normale aux éléments de renforcement de l'armature de carcasse. Avantageusement selon l'invention, les éléments de renforcement respectifs de la couche d'armature de carcasse et du retournement d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la couche d'armature de carcasse et du retournement d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la couche d'armature de carcasse et le retournement d'armature de carcasse sont dits découplés si, radialement à l'extérieur de la zone de couplage, l'épaisseur de mélange caoutchouteux séparant les éléments de renforcement respectifs de la couche d'armature de carcasse et du retournement d'armature de carcasse est supérieure à celle de la zone de couplage. Les éléments de renforcement respectifs de la couche d'armature de carcasse et du retournement d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de l'armature de carcasse entre les éléments de renforcement respectifs de la couche d'armature de carcasse et du retournement d'armature de carcasse. De préférence selon l'invention, dans la zone de découplage, les éléments de renforcement respectifs de la couche d'armature de carcasse et du retournement d'armature de carcasse sont séparés d'au plus 6 mm et de préférence ils sont séparés d'au moins 4 mm.

Au sens de l'invention, la première couche de mélange(s) polymérique(s) peut être constituée de plusieurs mélanges polymériques dont les propriétés de rigidité et plus spécifiquement dont les modules d'élasticité sous tension à 10 % d'allongement peuvent varier. Dans le cas de plusieurs mélanges polymériques constituant la première couche, ils forment avantageusement un gradient de rigidité décroissant depuis la tringle vers l'extrémité radialement extérieure de ladite première couche.

Avantageusement selon l'invention, la distance entre la spline P et la spline W est supérieure à 75% de la distance entre l'extrémité du retournement et la spline P, lesdites distances étant mesurées selon la direction définie par la droite passant par l'extrémité du retournement de la couche d'armature de carcasse et sa projection orthogonale sur la partie principale de la couche d'armature de carcasse.

Avantageusement encore, la distance entre l'extrémité du retournement et la spline P est supérieure à 0.7 fois la distance entre ladite extrémité du retournement et sa projection orthogonale, lesdites distances étant mesurées selon la direction définie par la droite passant par l'extrémité du retournement de la couche d'armature de carcasse et sa projection orthogonale sur la partie principale de la couche d'armature de carcasse.

Selon un mode de réalisation préféré de l'invention, dans une coupe méridienne, tout point du profil de la surface extérieure S du pneumatique entre lesdits premier et deuxième points F et E, est à une distance inférieure à 1.25 mm de la courbe P reliant lesdits premier et deuxième points F et E.

Les essais ont montré que les pneumatiques ainsi réalisés selon l'invention et dont la masse est inférieure à celle de pneumatiques de conception plus usuelle, comportant notamment des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Ces résultats sont d'autant plus surprenants que les conceptions plus usuelles de ce type de pneumatiques comportent une zone du bourrelet relativement épaisse notamment pour contenir des éléments complémentaires tels que des raidisseurs et permettre de supporter les appuis sur les crochets de jante lors des roulages. La surface extérieure de ce type de pneumatique de conception plus usuelle présentant une zone du bourrelet relativement épaisse est proche de la spline W.

Les inventeurs ont ainsi su mettre en évidence que les pneumatiques réalisés conformément à l'invention et qui présentent une zone du bourrelet relativement peu épaisse associée notamment à l'absence de couches d'éléments de renforcement complémentaires telles que des raidisseurs, permettent d'alléger le pneumatique et contre toute attente de conserver des propriétés en termes d'endurance satisfaisantes, voire de les améliorer.

Les inventeurs pensent interpréter ce résultat du fait du profil de la surface extérieure du pneumatique entre le point F et le point E, définie ci-dessus, qui conduit à une modification du contact entre la jante et le pneumatique et plus particulièrement de la zone de contact entre le crochet de jante et la partie du pneumatique qui vient en appui sur celui-ci lors de l'écrasement du pneumatique et des roulages. La zone de contact précitée est en effet réduite par rapport à des conceptions plus usuelles, ce qui permet de limiter l'usure au portage ainsi que l'usure due aux phénomènes de déradialisation lors des roulages. Ce profil de la surface extérieure du pneumatique entre les points E et F avec une zone concave dont l'extrémité radialement extérieure correspond au point d'inflexion de la spline P conduit par ailleurs à une optimisation du partage entre la flexion méridienne et le cisaillement de la première couche de mélange(s) polymérique(s) lors de la reprise des tensions dues au gonflage par le retournement de la couche d'armature de carcasse ; cela favorise notamment les performances en termes d'endurance. La position de l'extrémité du retournement de la couche d'armature de carcasse située dans une zone sensiblement équidistante de la partie principale de la couche d'armature de carcasse et de la surface extérieure du pneumatique dans la partie convexe de la spline P limite les déformations lors de la flexion sur le crochet de jante et lui confère une protection suffisante au regard d'éventuelles agressions. Par ailleurs, la valeur de la tangente de la spline P au point F optimise la zone d'appui du pneumatique sur la jante.

Ces résultats sont, par ailleurs, d'autant plus surprenants que les conceptions plus usuelles des zones des bourrelets de ce type de pneumatiques comportent un retournement d'armature de carcasse tel que la distance entre l'extrémité du retournement de l'armature de carcasse et le point radialement le plus intérieur du cercle circonscrit à la tringle est inférieure à 45 % de la distance entre le point axialement le plus extérieur de la partie principale de la couche d'armature de carcasse et le point radialement le plus intérieur du cercle circonscrit à la tringle pour notamment améliorer les performances du pneumatique en termes d'endurance. En effet, il est usuel de concevoir des pneumatiques avec un retournement d'armature de carcasse de longueur réduite pour augmenter la distance entre le retournement d'armature de carcasse et l'armature de carcasse, et ainsi limiter au mieux les déformations de cisaillement qui s'initient entre l'armature de carasse et son retournement notamment du fait des phénomènes de déradialisation qui apparaissent lors du roulage du pneumatique.

Il est également usuel dans la conception des pneumatiques dont l'armature de carcasse présente un retournement, destinés notamment à être monté sur une jante creuse (15° drop center) ou jante à seat coincé et à équiper des véhicules portant de lourdes charges, d'éviter un rapprochement et donc d'autant plus un couplage du retournement avec l'armature de carcasse de façon à prévenir tous risques de cisaillement entre l'armature de carcasse et son retournement qui vient pénaliser la première couche de mélange polymérique qui les sépare.

Les inventeurs ont ainsi su mettre en évidence que les pneumatiques réalisés conformément à l'invention et qui présentent notamment un retournement de l'armature carcasse avec une longueur supérieure aux conceptions plus usuelles, un couplage du retournement avec l'armature carcasse suivi d'un découplage dudit retournement et de l'armature de carcasse, associés au profil extérieur de la zone basse du pneumatique, permettent d'alléger le pneumatique et contre toute attente de conserver des propriétés en termes d'endurance des zones des bourrelets satisfaisantes, voire de les améliorer.

Par ailleurs, cet allègement de la zone du bourrelet du pneumatique améliore les pertes hystérétiques du pneumatique et donc ses performances en termes de résistance au roulement. Cet effet est d'autant plus marqué que le profil de la surface extérieure du pneumatique conduit à une diminution des variations de courbure en comparaison de conceptions plus usuelles comme expliqué précédemment.

Avantageusement selon l'invention, la direction de la tangente $T_{PF}$ de la spline P, étant donnée par la droite passant par le premier point F, forme avec la direction radiale un angle $\alpha_F$ compris entre -1° et +1°. La direction de la tangente $T_{PF}$ de la spline P est ainsi au plus près de la direction radiale pour limiter au mieux l'usure du pneumatique sur le crochet de jante.

Selon un mode de réalisation préféré de l'invention, la distance axiale maximale entre la spline P et la spline W est supérieure à 10% de la distance radiale entre les points E et F, la masse du pneumatique étant alors encore réduite.

De préférence également selon l'invention, la valeur de la surface délimitée par la spline P, la spline W, par la droite axiale passant par l'extrémité du retournement de la couche d'armature de carcasse et par la droite axiale passant par le point F est supérieur à six fois la surface d'un rectangle dont un côté est le segment reliant les points E et F, l'autre côté étant de longueur unitaire.

Selon un mode de réalisation préféré de l'invention, la projection orthogonale du point d'inflexion radialement le plus extérieur de la courbe P sur la partie principale de la couche d'armature de carcasse étant situé dans la zone de couplage du retournement de la couche d'armature de carcasse et la partie principale de la couche d'armature de carcasse.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la couche d'armature de carcasse et du retournement d'armature de carcasse augmente et d'une deuxième partie radialement la plus extérieure dans laquelle l'épaisseur de mélange caoutchouteux séparant les éléments de renforcement respectifs de la couche d'armature de carcasse et du retournement d'armature de carcasse est sensiblement constante.

Le découplage entre le retournement et l'armature de carcasse qui suit la zone de couplage est avantageusement obtenue par une augmentation de l'épaisseur de la première couche de mélange(s) polymérique(s). Ce découplage permet de venir compenser la diminution de la tension dans les éléments de renforcement de l'armature de carcasse lorsque l'on s'approche de l'extrémité de son retournement pour absorber les contraintes de cisaillement entre l'armature de carcasse et son retournement.

Avantageusement selon l'invention, la longueur de découplage est comprise entre 5 et 40 % de la distance entre l'extrémité du retournement de l'armature de carcasse et le point radialement le plus intérieur du cercle circonscrit à la tringle et de préférence entre 15 et 35 % de la distance entre l'extrémité du retournement de l'armature de carcasse et le point radialement le plus intérieur du cercle circonscrit à la tringle.

De préférence selon l'invention, le retournement de l'armature de carcasse et l'armature de carcasse sont couplés sur une longueur comprise entre 25 et 40% de la distance entre l'extrémité du retournement de l'armature de carcasse et le point radialement le plus intérieur du cercle circonscrit à la tringle.

Avantageusement selon l'invention, dans une coupe méridienne dudit pneumatique, l'extrémité radialement extérieure de la première couche de mélange(s) polymérique(s) est radialement extérieure à l'extrémité du retournement de l'armature de carcasse.

Selon une variante de réalisation de l'invention dans une coupe méridienne des zones des bourrelets du pneumatique, ledit retournement de la couche d'armature de carcasse étant axialement vers l'extérieur au contact d'une deuxième couche de mélange polymérique, elle-même au moins au contact d'une troisième couche de mélange polymérique formant la surface extérieure du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche de mélange polymérique formant la surface extérieure d'un flanc, et conformément à l'invention, dans une coupe méridienne dudit pneumatique, l'extrémité du retournement de l'armature de carcasse est radialement extérieure à l'extrémité radialement extérieure de la deuxième couche de mélange polymérique.

Selon d'autres variantes de réalisation de l'invention, dans une coupe méridienne des zones des bourrelets du pneumatique, l'extrémité du retournement de l'armature de carcasse est radialement intérieure à l'extrémité radialement extérieure de la deuxième couche de mélange polymérique.

Avantageusement encore selon d'autres variantes de réalisations des zones des bourrelets du pneumatique selon l'invention, l'extrémité radialement extérieure de la deuxième couche de mélange polymérique est radialement extérieure à l'extrémité radialement extérieure de la troisième couche de mélange polymérique.

Avantageusement selon l'invention, l'extrémité radialement intérieure de la deuxième couche de mélange polymérique est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance de la zone des bourrelets du pneumatique et ses performances en termes de résistance au roulement.

De préférence selon l'invention, le module d'élasticité sous tension à 10 % d'allongement de la première couche de mélange(s) polymérique(s) est inférieur ou égal au module d'élasticité sous tension à 10 % d'allongement du calandrage de la couche d'armature de carcasse. Ce choix permet notamment de concentrer les efforts de cisaillement au sein de la première couche de mélange polymérique.

De préférence encore selon l'invention, le module d'élasticité sous tension à 10 % d'allongement de la première couche de mélange(s) polymérique(s) est supérieur à 50% du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange(s) polymérique(s) tout en assurant de bonnes performances d'endurance.

Avantageusement selon l'invention, le module d'élasticité sous tension à 10 % d'allongement de la deuxième couche de mélange polymérique est inférieur à 150% du module d'élasticité sous tension à 10 % d'allongement du calandrage de la couche d'armature de carcasse et de préférence strictement inférieur à 25 MPa ; il est avantageusement encore supérieur au module d'élasticité sous tension à 10 % d'allongement de la première couche de mélange polymérique. Selon cette réalisation avantageuse de l'invention, la deuxième couche de mélange polymérique confère suffisamment de rigidité pour assurer une bonne tenue en endurance du pneumatique lors des appuis sur les crochets de jante tout en assurant des performances en termes de résistance au roulement satisfaisantes.

Selon un mode réalisation préféré de l'invention, pour favoriser le compromis entre les performances d'endurance et de résistance au roulement, le module d'élasticité sous tension à 10 % d'allongement de la première couche de mélange(s) polymérique(s) est supérieur ou égal au module d'élasticité sous tension à 10 % d'allongement de la troisième couche de mélange polymérique qui est lui-même supérieur ou égal au module d'élasticité sous tension à 10 % d'allongement de la quatrième couche de mélange polymérique.

Selon un mode préféré de réalisation de l'invention, dans tout plan méridien, sur une longueur du retournement d'armature de carcasse délimitée radialement entre l'extrémité dudit retournement et un point situé à une distance du point radialement le plus intérieur du cercle circonscrit à la tringle égale à 65% de la distance entre l'extrémité du retournement de l'armature de carcasse et le point radialement le plus intérieur du cercle circonscrit à la tringle, tout point du retournement de l'armature de carcasse est à une distance de la surface extérieure du pneumatique inférieure à 10 mm. De préférence encore, tout point du retournement de l'armature de carcasse est à une distance de la surface extérieure du pneumatique inférieure à 10 mm sur une longueur du retournement d'armature de carcasse délimitée radialement entre l'extrémité dudit retournement et un point situé à une distance du point radialement le plus intérieur du cercle circonscrit à la tringle égale à 50% de la distance entre l'extrémité du retournement de l'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement d'armature de carcasse et à une distance radiale de l'extrémité du retournement d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement d'armature de carcasse à l'extrémité du retournement d'armature de carcasse, de la quatrième couche de mélange polymérique formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement d'armature de carcasse et à une distance radiale de l'extrémité du retournement d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement d'armature de carcasse à l'extrémité du retournement d'armature de carcasse, de la quatrième couche de mélange polymérique formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange polymérique ainsi réalisée selon l'invention semble permettre de contribuer au meilleur positionnement de la première couche de mélange polymérique et à sa mise en place pour assurer le couplage et le découplage de la couche d'armature de carcasse et du retournement d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allègement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 4 qui représentent :

- figure 1, une vue méridienne d'un schéma d'un pneumatique selon l'invention,

- figure 2, une représentation schématique agrandie de la surface extérieure du pneumatique entre le point F de la zone du bourrelet et le point E,

- figure 3, une représentation schématique agrandie de la zone du bourrelet,

- figure 4, une représentation schématique agrandie de la zone d'un bourrelet d'un pneumatique de référence.

Les figures ne sont pas représentées à l'échelle pour en simplifier la compréhension.

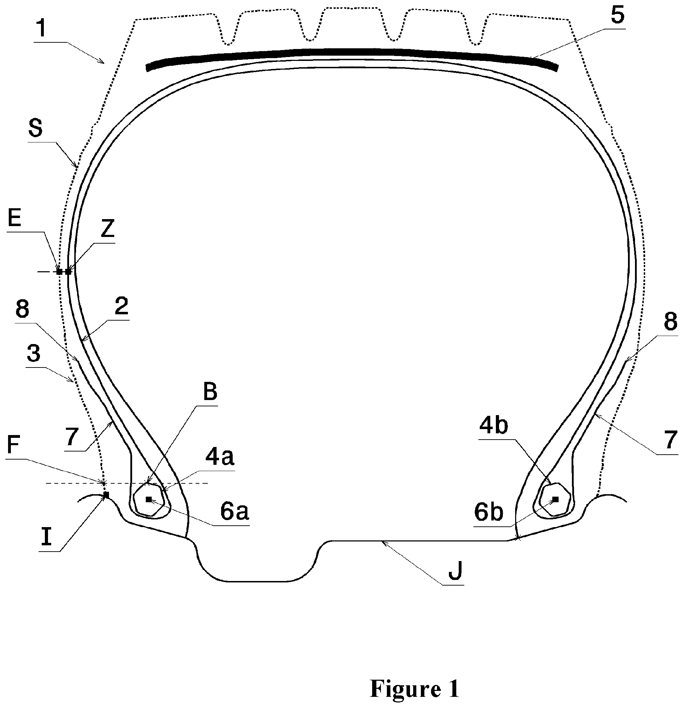

Sur la figure 1, le pneumatique 1 est de dimension 12 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement.

L'armature de carcasse 2, formée d'une seule couche de câbles métalliques, est enroulée dans chacun des bourrelets 3 autour d'une tringle 4a, 4b et forme dans chacun des bourrelets 3 un retournement 7 de la couche d'armature de carcasse présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles à couche de structure 1+6+12, non fretté, constitué d'un noyau central formé d'un fil, d'une couche intermédiaire formée de six fils et d'une couche externe formée de douze fils.

La figure 1 illustre le pneumatique monté sur sa jante nominale J ; le point Z axialement le plus extérieur de la partie principale de la couche d'armature de carcasse 2 est déterminé, le pneumatique étant gonflé à sa pression nominale, par exemple par tomographie. Le point E est le point axialement le plus extérieur du pneumatique lorsque celui-ci est monté sur sa jante nominale J et gonflé à sa pression nominale. Le point F est défini par l'intersection entre la surface extérieure du pneumatique et la droite, parallèle à l'axe de rotation, passant par le point B, radialement le plus extérieur de la tringle 4.

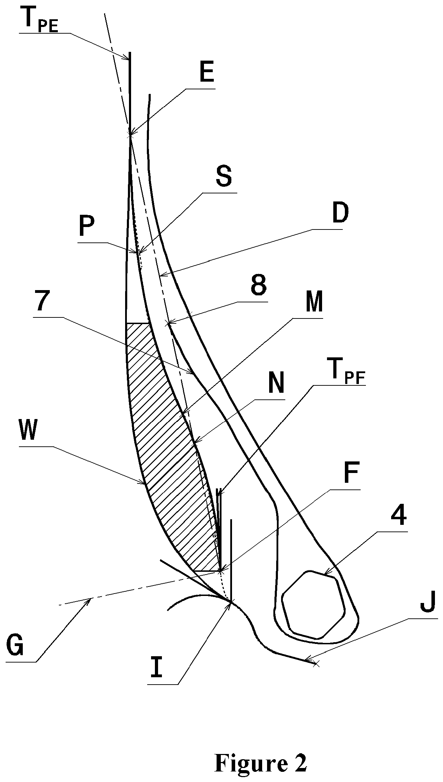

La figure 2 illustre schématiquement la surface extérieure S du pneumatique ente les points E et F sur une coupe méridienne du pneumatique, ledit pneumatique étant monté sur sa jante nominale J et gonflé à sa pression nominale.

Sur cette coupe méridienne, tout point du profil de la surface extérieure S du pneumatique entre les points F et E est à une distance inférieure à 0.62 mm de la spline P reliant lesdits premier et deuxième points F et E, la tangente $T_{PE}$ de ladite spline P, passant par le point E formant un angle $\alpha_E$ avec la direction radiale égal à 0.4°, la tangente $T_{PF}$ de ladite spline P, passant par le point F formant un angle $\alpha_F$ avec la direction radiale égal à 2.7°, la tension $t_{Fp}$ au point F valant 1.16 et la tension $t_{Ep}$ au point E valant 1.86. Les coordonnées des points de ladite spline P, dans le repère direct formé par la droite D reliant les points F et E, de longueur K égale à 107.6 mm, et sa perpendiculaire G passant par ledit point F, étant données par :

$$[ K * ( (-2u^3+3u^2) + t_{Fp} * (u^3-2u^2+u)*\cos(\alpha_F) + t_{Ep}*(u^3-u^2)*\cos(\alpha_E) ) ,$$

$$K * ( t_{Fp} * (u^3-2u^2+u)*\sin(\alpha_F) + t_{Ep}*(u^3-u^2)*\sin(\alpha_{Ep}) ) ]$$

avec u appartenant à l'intervalle [0, 1].

La distance radiale entre l'unique point d'inflexion M de la spline P et le point F est égale à 39.2 mm et représente 36.4 % de la distance radiale entre les points E et F qui est égale à 107.6 mm, et donc bien comprise entre 25 et 50 % de cette distance.

La figure 2 illustre encore la spline W définie conformément à l'invention entre les points E et I, I étant le point de contact axialement le plus extérieur du pneumatique au contact de la jante J.

La figure 2 illustre bien qu'au moins 95 % des points de la spline P sont axialement intérieurs aux points de la spline W. Par ailleurs, la distance axiale maximale L entre la spline P et la spline W est égale à 14.5 mm et donc égale à 13.5 % de la distance radiale entre les points E et F.

La valeur de la surface, représentée par des hachures sur la figure, délimitée par la spline P, la spline W, par la droite axiale passant par l'extrémité du retournement de la couche d'armature de carcasse et par la droite axiale passant par le point F est égale à 700 mm² et donc supérieur à trois fois la valeur de la surface du rectangle dont un côté est le segment reliant les points E et F, l'autre côté étant de longueur unitaire, soit 106.7 mm².

La distance $d_1$ entre l'extrémité 8 du retournement 7 et sa projection orthogonale $8_p$ sur la partie principale de la couche d'armature de carcasse est égale 5.4 mm. La distance $d_2$ entre l'extrémité 8 du retournement 7 et la spline P, mesurée selon la direction définie par la droite passant par l'extrémité 8 du retournement 7 de la couche d'armature de carcasse et sa projection orthogonale $8_p$ sur la partie principale de la couche d'armature de carcasse est égale à 4.4 mm. La distance $d_2$ est donc supérieure à 0.7 fois la distance $d_1$.

La distance $d_3$ entre la spline P et la spline W, mesurée selon la direction définie par la droite passant par l'extrémité du retournement de la couche d'armature de carcasse et sa projection orthogonale sur la partie principale de la couche d'armature de carcasse est égale à 6.7 mm. La distance $d_3$ est donc supérieure à la distance $d_2$.

Sur cette figure 2, il ressort également que le point d'inflexion M de la spline P est radialement extérieur au point d'intersection N de la droite [EF] avec la spline P.

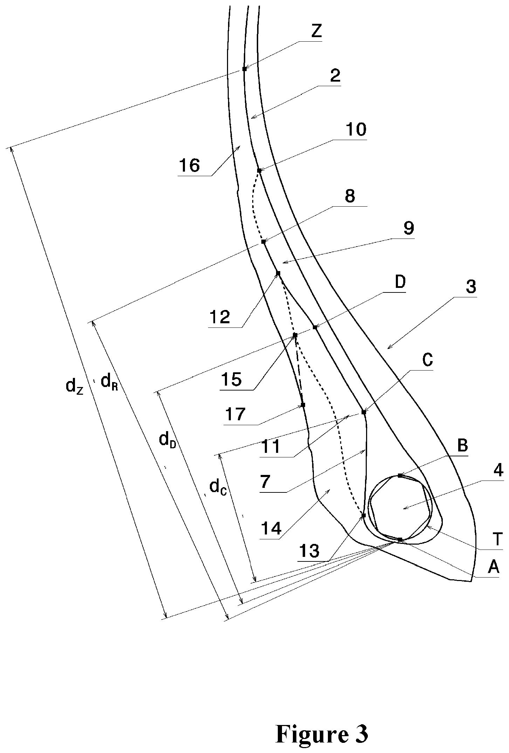

La figure 3 illustre de manière agrandie une représentation schématique en coupe d'un bourrelet 3 du pneumatique 1, dans lequel on retrouve une partie de la couche d'armature de carcasse 2 enroulée autour d'une tringle 4 pour former un retournement 7 avec une extrémité 8.

Sur cette figure 3, est matérialisé le point Z axialement le plus extérieur de la partie principale de la couche d'armature de carcasse 2 ; il est déterminé par exemple par tomographie, le pneumatique étant gonflé à sa pression nominale.

Sur cette figure 3, est encore matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante. Le rayon du cercle T circonscrit à la tringle est égal à 8.25 mm.

On détermine également le point B radialement le plus extérieur du cercle T.

La distance dz entre le point Z et le point A est égale à 128 mm.

La distance $d_R$ entre le point 8 et le point A est égale à 90 mm.

Le ratio de la distance $d_R$ sur la distance dz est égal à 70% et donc compris entre 45 et 90%.

Le retournement 7 de la couche d'armature de carcasse vient se coupler à la partie principale de la couche d'armature de carcasse 2 à partir du point C, tel que la distance $d_C$ entre le point C et le point A est égale à 37 mm.

Le ratio de la distance $d_C$ sur la distance $d_R$ est égal à 41% et donc compris entre 30 et 55%.

Le retournement 7 de la couche d'armature de carcasse est ensuite découplé de partie principale de la couche d'armature de carcasse 2 à partir du point D, tel que la distance $d_D$ entre le point D et le point A est égale à 66 mm et telle que la longueur de couplage entre le point C et le point D est égale à 29 mm et donc comprise entre 25 et 40 % de la distance $d_R$. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse, est sensiblement constante et égale à 2.9 mm.

La longueur de découplage entre le point D et le point 8 est égale à 21 mm et donc comprise entre 15 et 35 % de la distance $d_R$. La longueur de découplage est mesurée selon la droite passant par les points D et 8.

Le retournement 7 de la couche d'armature de carcasse est séparé de l'armature de carcasse 2 par une première couche de mélange polymérique 9, présentant une extrémité radialement extérieure 10 à une distance $d_{10}$ du point A égale à 117 mm. La première couche de mélange polymérique 9 présente un module d'élasticité sous tension à 10 % d'allongement égal à 7.8 MPa et donc inférieur au module d'élasticité sous tension à 10 % d'allongement des couches de calandrage de l'armature de carcasse 2.

La première couche de mélange polymérique 9 est profilée pour venir en appui sur la tringle 4 et assurer le couplage et découplage entre le retournement de la couche d'armature de carcasse 7 et la partie principale de la couche d'armature de carcasse 2.

Axialement à l'extérieur du retournement 7 de la couche d'armature de carcasse est représentée la deuxième couche de mélange polymérique 11 dont l'extrémité radialement extérieure 12 est radialement à l'intérieur de l'extrémité 8 du retournement 7 de la couche d'armature de carcasse. L'extrémité radialement intérieure 13 de la deuxième couche de mélange polymérique 11 est radialement comprise entre les points A et B, respectivement radialement le plus intérieur et radialement le plus extérieur du cercle circonscrit à la tringle.

La deuxième couche de mélange polymérique 11 présente un module d'élasticité sous tension à 10 % d'allongement égal à 12.5 MPa et donc supérieur au module d'élasticité sous tension à 10 % d'allongement des couches de calandrage de l'armature de carcasse 2.

Au contact de la deuxième couche de mélange polymérique 11 et radialement sous la tringle, on trouve la troisième couche de mélange polymérique 14, dont l'extrémité axialement la plus extérieure 15 est radialement à l'intérieur de l'extrémité 12 de la deuxième couche de mélange polymérique 11.

La troisième couche de mélange polymérique 14 présente un module d'élasticité sous tension à 10 % d'allongement égal à 7.1 MPa.

Axialement au contact de la première couche de mélange polymérique 9, de la deuxième couche de mélange polymérique 11, et de la troisième couche de mélange polymérique 14, se trouve la quatrième couche de mélange polymérique 16. L'extrémité 17 radialement intérieure de la quatrième couche de mélange polymérique 16 est radialement intérieure à l'extrémité 15 de la troisième couche de mélange polymérique 14.

La quatrième couche de mélange polymérique 16 présente un module d'élasticité sous tension à 10 % d'allongement égal à 3.1 MPa.

Des essais d'endurance ont été réalisés en faisant rouler deux pneus rabotés l'un sur l'autre avec une pression régulée de 5.5b, et une charge de 4571 daN à une vitesse de 50km/h et à une température ambiante de 15°C pendant 20000 km.

Ces essais sont réalisés en montant les pneumatiques sur des jantes de dimension 22.5x9.00 dont la rugosité de surface du crochet de jante favorise l'abrasion du pneumatique.

Les pneumatiques selon l'invention sont comparés à des pneumatiques de référence R1 et R2.

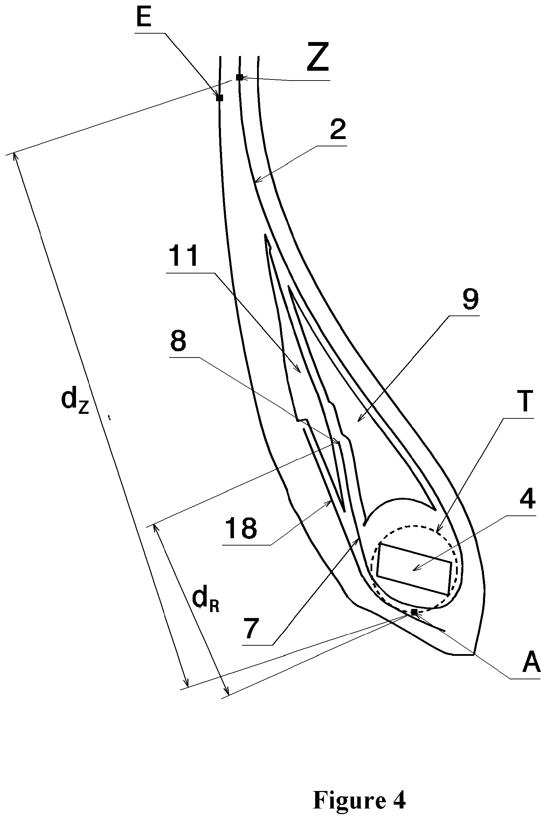

Les pneumatiques R1, dont une représentation schématique agrandie de la zone du bourrelet est représentée sur la figure 4, sont des pneumatiques de conception usuelle comportant des raidisseurs 18 et des zones des bourrelets plus usuelles avec notamment une épaisseur du bourrelet plus importante, avec notamment une distance $d_R$ entre l'extrémité 8 du retournement 7 de la couche d'armature de carcasse 2 et le point A radialement le plus intérieur du cercle T circonscrit à la tringle 4 égale à 37% de la distance dz entre le point axialement le plus extérieur Z de la partie principale de la couche d'armature de carcasse et le point A radialement le plus intérieur du cercle T circonscrit à la tringle et des première et deuxième couches de mélange polymérique 9 et 11 dont le module d'élasticité sous tension à 10 % d'allongement est égal à 3.7 MPa.

Les pneumatiques R2 diffèrent des pneumatiques R1 par l'absence de raidisseur 18.

Les essais ont été réalisés pour les pneumatiques selon l'invention avec des conditions identiques à celles appliquées aux pneumatiques de référence R1 et R2.

Après un roulage de 20000 Km, on mesure le volume perdu dans la zone du pneumatique qui vient au contact de la jante à l'aide d'un profilomètre laser. Et on vérifie sur des coupes méridiennes si des fissures sont apparues dans la zone du pneumatique radialement à l'intérieur du point E.

Concernant la mesure de volume perdu, les essais réalisés conduisent pour les pneumatiques de référence R2 à des performances établissant la base 100, l'indice des autres pneumatiques étant le rapport entre le volume perdu du pneumatique R2 et le volume perdu du pneumatique concerné.

| R$_1$ | R$_2$ | Invention |
|---|---|---|
| 250 | 100 | 300 |
| Fissures | Fissures | Pas de fissure |

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique R$_1$.

| Pneumatique R$_1$ | Pneumatique R$_2$ | Invention |
|---|---|---|
| 100 | 98 | 96 |

## Revendications

1. Pneumatique (1), monté sur une jante (J) creuse de type 15° drop centre nominale et gonflé à sa pression nominale, comprenant une armature de carcasse radiale (2), constituée d'une unique couche d'armature de carcasse formée d'éléments de renforcement, ledit pneumatique comprenant une armature de sommet (5), elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle (4a, 4b) pour former une partie principale de la couche d'armature de carcasse s'étendant d'une tringle à l'autre et un retournement (7) de la couche d'armature de carcasse dans chacun des bourrelets, ledit retournement (7) de la couche d'armature de carcasse étant séparé de la partie principale de la couche d'armature de carcasse par une première couche (9) de mélange(s) polymérique(s) s'étendant radialement depuis la tringle (4a, 4b) jusqu'au moins l'extrémité (8) du retournement (7) de la couche d'armature de carcasse, dans une coupe méridienne dudit pneumatique :

   - le retournement (7) de la couche d'armature de carcasse et la partie principale de la couche d'armature de carcasse étant les seules couches d'éléments de renforcement dont l'allongement à rupture est inférieur à 6 % présentes dans une zone du flanc constituant au moins 90% de la surface du flanc comprise radialement entre l'extrémité (8) du retournement (7) de la couche d'armature de carcasse et le point (B) radialement le plus à l'extérieur de la tringle, la mesure de l'allongement à la rupture étant effectuée selon la norme ISO 6892 de 1984,
   - la distance (d$_R$) entre l'extrémité (8) du retournement (7) de la couche d'armature de carcasse et le point (A) radialement le plus intérieur du cercle circonscrit à la tringle étant comprise entre 45 et 90% de la distance (dz) entre le point (Z) axialement le plus extérieur de la partie principale de la couche d'armature de carcasse et le point (A) radialement le plus intérieur du cercle (T) circonscrit à la tringle (4),
   - radialement vers l'extérieur, à partir d'un point (C) du retournement (7) de la couche d'armature de carcasse situé à une distance (d$_C$) du point (A) radialement le plus intérieur du cercle (T) circonscrit à la tringle (4) comprise entre 30 et 55% de la distance (d$_R$) entre l'extrémité (8) du retournement (7) de la couche d'armature de carcasse et le point (A) radialement le plus intérieur du cercle (T) circonscrit à la tringle (4), le retournement (7) de la couche d'armature de carcasse et la partie principale de la couche d'armature de carcasse étant couplés pour former une zone de couplage sur une longueur comprise entre 15 et 65% de la distance (d$_R$) entre l'extrémité (8) du retournement (7) de la couche d'armature de carcasse et le point (A) radialement le plus intérieur du cercle (T) circonscrit à la tringle (4), pour être ensuite découplés par la première couche (9) de mélange(s) polymérique(s), **caractérisé en ce que,**
   - tout point du profil de la surface extérieure S du pneumatique, entre un premier point F, lui-même défini par l'intersection d'une droite d'orientation axiale, passant par le point radialement le plus extérieur de la tringle et la surface extérieure du pneumatique, et un deuxième point E, qui est le point axialement le plus extérieur du pneumatique, est à une distance inférieure à 2.5 mm d'une spline P reliant lesdits premier et deuxième points F et E, la spline P étant une courbe paramétrée dont les coordonnées dans le repère direct d'origine F et dont le premier axe est formé par la droite passant par les points F et E sont données par :

$$[\, K * (\, (-2u^3+3u^2) + t_{Fp} * (u^3-2u^2+u)*\cos(\alpha_F) + t_{Ep} *(u^3-u^2)*\cos(\alpha_E)\,)\, ,$$

$$K * (\, t_{Fp} * (u^3-2u^2+u)*\sin(\alpha_F) + t_{Ep} *(u^3-u^2)*\sin(\alpha_E)\,)\, ]$$

avec u, abscisse curviligne relative, appartenant à l'intervalle [0, 1],

- la direction de la tangente $T_{PF}$ de ladite spline P étant donnée par la droite passant par ledit premier point F et formant avec la direction radiale un angle $\alpha_F$ compris entre -3° et +3° et inférieur à l'angle formé par la droite [EF] et la direction radiale,

- la direction de la tangente $T_{PE}$ de ladite spline P étant donnée par la droite passant par ledit deuxième point E et formant avec la direction radiale un angle $\alpha_E$ compris entre 0° et +5° et inférieur à l'angle formé par la droite [EF] et la direction radiale,

- la tension ou facteur d'échelle $t_{Fp}$ sur la tangente $T_{PF}$, appartenant à l'intervalle [0.8, 1.3],

- la tension ou facteur d'échelle $t_{Ep}$ sur la tangente $T_{PE}$, appartenant à l'intervalle [1.5*$t_{Fp}$, 2.3*$t_{Fp}$],

- ladite spline P et la droite [EF] présente un unique point d'intersection N, distinct des points E et F, ledit point d'intersection N étant radialement intérieur à l'unique point d'inflexion M de ladite spline P,

- l'unique point d'inflexion M de ladite spline P est à une distance radiale du point F comprise entre 25 et 50 % de la distance radiale entre les points E et F,

- au moins 95% des points de la spline P sont axialement intérieurs aux points d'une spline W définie entre les points E et I, ledit point I étant défini par le point de contact du pneumatique sur la jante J axialement le plus extérieur,

- la direction de la tangente $T_{WE}$ de ladite spline W étant donnée par la droite passant par ledit premier point E et formant avec la direction radiale un angle $\alpha_{WE}$ égal à 0°,

- la direction de la tangente $T_{WI}$ de ladite spline W étant donnée par la droite tangente au crochet de la jante J au point I,

- les tensions ou facteurs d'échelle $t_{Iw}$ et $t_{Ew}$ sur les tangentes $T_{WI}$ et $T_{WE}$ étant égales à 1,

- la distance axiale maximale entre la spline P et la spline W est supérieure à 5% de la distance radiale entre les points E et F,

- la surface délimitée par la spline P, par la spline W, par la droite axiale passant par l'extrémité du retournement de la couche d'armature de carcasse et par la droite axiale passant par le point F est supérieur à trois fois la surface d'un rectangle dont un côté est le segment reliant les points E et F, l'autre côté étant de longueur unitaire.

2. Pneumatique (1) selon la revendication 1, **caractérisé en ce que** tout point du profil de la surface extérieure (S) du pneumatique entre lesdits premier et deuxième points (F) et (E), est à une distance inférieure à 1.25 mm de la spline (P) reliant lesdits premier et deuxième points (F) et (E).

3. Pneumatique (1) selon la revendication 1 ou 2, **caractérisé en ce que** la direction de la tangente $T_{PF}$ de la spline P, étant donnée par la droite passant par le premier point F, forme avec la direction radiale un angle $\alpha_F$ compris entre -1° et +1°.

4. Pneumatique (1) selon l'une des revendications précédentes, **caractérisé en ce que** la distance axiale maximale entre la spline P et la spline W est supérieure à 10% de la distance radiale entre les points E et F.

5. Pneumatique (1) selon l'une des revendications précédentes, **caractérisé en ce que** la valeur de la surface délimitée par la spline P, par la spline W, par la droite axiale passant par l'extrémité (8) du retournement (7) de la couche d'armature de carcasse (2) et par la droite axiale passant par le point F est supérieur à six fois la surface d'un rectangle dont un côté est le segment reliant les points E et F, l'autre côté étant de longueur unitaire.

6. Pneumatique (1) selon l'une des revendications précédentes, **caractérisé en ce que** la longueur de découplage est comprise entre 5 et 40 % de la distance ($d_R$) entre l'extrémité (8) du retournement (7) de l'armature de carcasse et le point (A) radialement le plus intérieur du cercle (T) circonscrit à la tringle (4), et de préférence comprise entre 15 et 35 % de la distance ($d_R$) entre l'extrémité (8) du retournement (7) de l'armature de carcasse et le point (A) radialement le plus intérieur du cercle (T) circonscrit à la tringle (4).

7. Pneumatique (1) selon l'une des revendications précédentes, **caractérisé en ce que** le retournement (7) de l'armature de carcasse et l'armature de carcasse sont couplés sur une longueur comprise entre 25 et 40% de la distance ($d_R$) entre l'extrémité (8) du retournement (7) de l'armature de carcasse et le point (A) radialement le plus intérieur du cercle (T) circonscrit à la tringle (4).

8. Pneumatique (1) selon l'une des revendications précédentes, **caractérisé en ce que** le module d'élasticité sous tension à 10 % d'allongement des couches de calandrage de la couche d'armature de carcasse (2) est compris entre 4 et 16 MPa et de préférence entre 8 et 12 MPa, la mesure du module d'élasticité étant effectuée en traction selon la norme AFNOR-NFT-46002 de septembre 1988.

9. Pneumatique (1) selon l'une des revendications précédentes, **caractérisé en ce que** le module d'élasticité sous tension à 10 % d'allongement de la première couche (9) de mélange(s) polymérique(s) est inférieur ou égal au module d'élasticité sous tension à 10 % d'allongement du calandrage de la couche d'armature de carcasse (2).

10. Pneumatique (1) selon l'une des revendications précédentes, **caractérisé en ce que** le module d'élasticité sous tension à 10 % d'allongement de la première couche (9) de mélange(s) polymérique(s) est supérieur à 50% du module d'élasticité sous tension à 10 % d'allongement du calandrage de la couche d'armature de carcasse (2) et de préférence est supérieur à 70% du module d'élasticité sous tension à 10 % d'allongement du calandrage de la couche d'armature de carcasse (2).

11. Pneumatique (1) selon l'une des revendications précédentes, ledit retournement (7) de la couche d'armature de carcasse étant axialement vers l'extérieur au contact d'une deuxième couche (11) de mélange polymérique, **caractérisé en ce que** le module d'élasticité sous tension à 10 % d'allongement de la deuxième couche (11) de mélange polymérique est inférieur à 150% du module d'élasticité sous tension à 10 % d'allongement du calandrage de la couche d'armature de carcasse (2), de préférence strictement inférieur à 25 MPa et de préférence encore supérieur au module d'élasticité sous tension à 10 % d'allongement de la première (9) couche de mélange polymérique, la mesure du module d'élasticité étant effectuée en traction selon la norme AFNOR-NFT-46002 de septembre 1988.

12. Pneumatique (1) selon l'une des revendications précédentes, **caractérisé en ce que,** dans tout plan méridien, sur une longueur du retournement (7) de la couche d'armature de carcasse délimitée radialement entre l'extrémité (8) dudit retournement de la couche d'armature de carcasse et un point situé à une distance du point (A) radialement le plus intérieur du cercle (T) circonscrit à la tringle (4) égale à 65% de la distance ($d_R$) entre l'extrémité (8) du retournement (7) de la couche d'armature de carcasse et le point (A) radialement le plus intérieur du cercle (T) circonscrit à la tringle (4), tout point du retournement (7) de la couche d'armature de carcasse est à une distance de la surface extérieure (S) du pneumatique inférieure à 10 mm.

**Patentansprüche**

1. Reifen (1), welcher auf einer hohlen Felge (J) vom Typ "15°-Steilschulterfelge" montiert ist und auf seinen Nenndruck aufgepumpt ist, und welcher eine radiale Karkassenbewehrung (2) umfasst, die aus einer einzigen Karkassenbewehrungsschicht besteht, die von Verstärkungselementen gebildet wird, wobei der Reifen eine Scheitelbewehrung (5) umfasst, die ihrerseits radial von einem Laufstreifen bedeckt ist, wobei der Laufstreifen über zwei Seitenwände mit zwei Wülsten verbunden ist, wobei die Schicht von Verstärkungselementen der Karkassenbewehrung in jedem der Wülste durch Umschlag um einen Wulstkern (4a, 4b) verankert ist, um einen Hauptteil der Karkassenbewehrungsschicht, der sich von einem Wulstkern zum anderen erstreckt, und einen umgeschlagenen Teil (7) der Karkassenbewehrungsschicht in jedem der Wülste zu bilden, wobei der umgeschlagene Teil (7) der Karkassenbewehrungsschicht vom Hauptteil der Karkassenbewehrungsschicht durch eine erste Schicht (9) aus Polymermischung(en) getrennt ist, die sich radial vom Wulstkern (4a, 4b) bis wenigstens zum Ende (8) des umgeschlagenen Teils (7) der Karkassenbewehrungsschicht erstreckt, wobei in einem Meridianschnitt des Reifens:

   - der umgeschlagene Teil (7) der Karkassenbewehrungsschicht und der Hauptteil der Karkassenbewehrungsschicht die einzigen Schichten von Verstärkungselementen, deren Bruchdehnung kleiner als 6 % ist, sind, die in einem Bereich der Seitenwand vorhanden sind, der wenigstens 90 % der Oberfläche der Seitenwand bildet, die radial zwischen dem Ende (8) des umgeschlagenen Teils (7) der Karkassenbewehrungsschicht und dem radial äußersten Punkt (B) des Wulstkerns liegt, wobei die Messung der Bruchdehnung gemäß der Norm ISO 6892 von 1984 durchgeführt wird,
   - der Abstand ($d_R$) zwischen dem Ende (8) des umgeschlagenen Teils (7) der Karkassenbewehrungsschicht und dem radial innersten Punkt (A) des dem Wulstkern umbeschriebenen Kreises zwischen 45 und 90 % des Abstands ($d_Z$) zwischen dem axial äußersten Punkt (Z) des Hauptteils der Karkassenbewehrungsschicht und dem radial innersten Punkt (A) des dem Wulstkern (4) umbeschriebenen Kreises (T) beträgt,
   - radial außen, ab einem Punkt (C) des umgeschlagenen Teils (7) der Karkassenbewehrungsschicht, der sich in einem Abstand ($d_C$) von dem radial innersten Punkt (A) des dem Wulstkern (4) umbeschriebenen Kreises (T) befindet, der zwischen 30 und 55 % des Abstands ($d_R$) zwischen dem Ende (8) des umgeschlagenen Teils (7) der Karkassenbewehrungsschicht und dem radial innersten Punkt (A) des dem Wulstkern (4) umbeschriebenen Kreises (T) beträgt, der umgeschlagene Teil (7) der Karkassenbewehrungsschicht und der Hauptteil der Karkassenbewehrungsschicht derart gekoppelt sind, dass sie einen Kopplungsbereich auf einer Länge bilden, die zwischen 15 und 65 % des Abstands ($d_R$) zwischen dem Ende (8) des umgeschlagenen Teils (7) der Karkassenbewehrungsschicht und dem radial innersten Punkt (A) des dem Wulstkern (4) umbeschriebenen Kreises (T) beträgt, um anschließend durch die erste Schicht (9) aus Polymermischung(en) entkoppelt zu werden, **dadurch gekennzeichnet, dass**

- jeder Punkt des Profils der Außenfläche S des Reifens zwischen einem ersten Punkt F, der seinerseits durch den Schnitt einer Geraden mit axialer Ausrichtung, die durch den radial äußersten Punkt des Wulstkerns verläuft, und der Außenfläche des Reifens definiert ist, und einem zweiten Punkt E, welcher der axial äußerste Punkt des Reifens ist, einen Abstand von weniger als 2,5 mm von einem Spline P hat, der den ersten und den zweiten Punkt F und E verbindet, wobei der Spline P eine parametrisierte Kurve ist, deren Koordinaten in dem rechtshändigen Koordinatensystem mit dem Ursprung F, dessen erste Achse von der durch die Punkte F und E verlaufenden Geraden gebildet wird, gegeben sind durch:

$$[K * ((-2u^3+3u^2) + t_{Fp} * (u^3-2u^2+u)*\cos(\alpha_F) +$$
$$t_{Ep} * (u^3-u^2)*\cos(\alpha_E)),$$
$$K * (t_{Fp} * (u^3-2u^2+u)*\sin(\alpha_F) + t_{Ep} * (u^3-u^2)*\sin(\alpha_E))],$$

wobei u, eine relative krummlinige Abszisse, im Intervall [0, 1] liegt,
- wobei die Richtung der Tangente $T_{PF}$ des Splines P durch die Gerade gegeben ist, die durch den ersten Punkt F verläuft und mit der radialen Richtung einen Winkel $\alpha_F$ bildet, der zwischen -3° und +3° liegt und kleiner als der Winkel ist, der von der Geraden [EF] und der radialen Richtung gebildet wird,
- wobei die Richtung der Tangente $T_{PE}$ des Splines P durch die Gerade gegeben ist, die durch den zweiten Punkt E verläuft und mit der radialen Richtung einen Winkel $\alpha_E$ bildet, der zwischen 0° und +5° liegt und kleiner als der Winkel ist, der von der Geraden [EF] und der radialen Richtung gebildet wird,
- wobei die Spannung oder der Skalierungsfaktor $t_{Fp}$ auf der Tangente $T_{PF}$ im Intervall [0,8, 1,3] liegt,
- wobei die Spannung oder der Skalierungsfaktor $t_{Ep}$ auf der Tangente $T_{PE}$ im Intervall [1, 5*$t_{Fp}$, 2, 3*$t_{Fp}$] liegt,
- der Spline P und die Gerade [EF] einen einzigen Schnittpunkt N aufweisen, der von den Punkten E und F verschieden ist, wobei sich der Schnittpunkt N radial innerhalb des einzigen Wendepunktes M des Splines P befindet,
- der einzige Wendepunkt M des Splines P sich in einem radialen Abstand vom Punkt F befindet, der zwischen 25 und 50 % des radialen Abstands zwischen den Punkten E und F beträgt,
- wenigstens 95 % der Punkte des Splines P sich axial innerhalb der Punkte eines Splines W befinden, der zwischen den Punkten E und I definiert ist, wobei der Punkt I durch den axial äußersten Kontaktpunkt des Reifens auf der Felge J definiert ist,
- wobei die Richtung der Tangente $T_{WE}$ des Splines W durch die Gerade gegeben ist, die durch den ersten Punkt E verläuft und mit der radialen Richtung einen Winkel $\alpha_{WE}$ bildet, der gleich 0° ist,
- wobei die Richtung der Tangente $T_{WI}$ des Splines W durch die Gerade gegeben ist, die tangential zum Horn der Felge J im Punkt I verläuft,
- wobei die Spannungen oder Skalierungsfaktoren $t_{Iw}$ und $t_{Ew}$ auf den Tangenten $T_{WI}$ und $T_{WE}$ gleich 1 sind,
- der maximale axiale Abstand zwischen dem Spline P und dem Spline W größer als 5 % des radialen Abstands zwischen den Punkten E und F ist,
- die Fläche, die vom Spline P, vom Spline W, von der axialen Geraden, die durch das Ende des umgeschlagenen Teils der Karkassenbewehrungsschicht verläuft, und von der axialen Geraden, die durch Punkt F verläuft, begrenzt wird, größer als das Dreifache der Fläche eines Rechtecks ist, von dem eine Seite das die Punkte E und F verbindende Segment ist, während die andere Seite die Länge eins hat.

**2.** Reifen (1) nach Anspruch 1, **dadurch gekennzeichnet, dass** jeder Punkt des Profils der Außenfläche (S) des Reifens zwischen dem ersten und dem zweiten Punkt (F) und (E) einen Abstand von weniger als 1,25 mm von einem Spline (P) hat, der den ersten und den zweiten Punkt (F) und (E) verbindet.

**3.** Reifen (1) nach Anspruch 1 oder 2, **dadurch gekennzeichnet, dass** die Richtung der Tangente $T_{PF}$ des Splines P, die durch die durch den ersten Punkt F verlaufende Gerade gegeben ist, mit der radialen Richtung einen Winkel $\alpha_F$ bildet, der zwischen -1° und +1° liegt.

4. Reifen (1) nach einem der vorhergehenden Ansprüche, **dadurch gekennzeichnet, dass** der maximale axiale Abstand zwischen dem Spline P und dem Spline W größer als 10 % des radialen Abstands zwischen den Punkten E und F ist.

5. Reifen (1) nach einem der vorhergehenden Ansprüche, **dadurch gekennzeichnet, dass** die Größe der Fläche, die vom Spline P, vom Spline W, von der axialen Geraden, die durch das Ende (8) des umgeschlagenen Teils (7) der Karkassenbewehrungsschicht (2) verläuft, und von der axialen Geraden, die durch Punkt F verläuft, begrenzt wird, größer als das Sechsfache der Fläche eines Rechtecks ist, von dem eine Seite das die Punkte E und F verbindende Segment ist, während die andere Seite die Länge eins hat.

6. Reifen (1) nach einem der vorhergehenden Ansprüche, **dadurch gekennzeichnet, dass** die Länge der Entkopplung zwischen 5 und 40 % des Abstands ($d_R$) zwischen dem Ende (8) des umgeschlagenen Teils (7) der Karkassenbewehrung und dem radial innersten Punkt (A) des dem Wulstkern (4) umbeschriebenen Kreises (T) und vorzugsweise zwischen 15 und 35 % des Abstands ($d_R$) zwischen dem Ende (8) des umgeschlagenen Teils (7) der Karkassenbewehrung und dem radial innersten Punkt (A) des dem Wulstkern (4) umbeschriebenen Kreises (T) beträgt.

7. Reifen (1) nach einem der vorhergehenden Ansprüche, **dadurch gekennzeichnet, dass** der umgeschlagene Teil (7) der Karkassenbewehrung und die Karkassenbewehrung auf einer Länge gekoppelt sind, die zwischen 25 und 40 % des Abstands ($d_R$) zwischen dem Ende (8) des umgeschlagenen Teils (7) der Karkassenbewehrung und dem radial innersten Punkt (A) des dem Wulstkern (4) umbeschriebenen Kreises (T) beträgt.

8. Reifen (1) nach einem der vorhergehenden Ansprüche, **dadurch gekennzeichnet, dass** der Elastizitätsmodul unter Spannung bei 10 % Dehnung der Kalandrierschichten der Karkassenbewehrungsschicht (2) zwischen 4 und 16 MPa und vorzugsweise zwischen 8 und 12 MPa liegt, wobei die Messung des Elastizitätsmoduls unter Zugbeanspruchung nach der Norm AFNOR-NFT-46002 vom September 1988 durchgeführt wird.

9. Reifen (1) nach einem der vorhergehenden Ansprüche, **dadurch gekennzeichnet, dass** der Elastizitätsmodul unter Spannung bei 10 % Dehnung der ersten Schicht (9) aus Polymermischung(en) kleiner oder gleich dem Elastizitätsmodul unter Spannung bei 10 % Dehnung der Kalandrierung der Karkassenbewehrungsschicht (2) ist.

10. Reifen (1) nach einem der vorhergehenden Ansprüche, **dadurch gekennzeichnet, dass** der Elastizitätsmodul unter Spannung bei 10 % Dehnung der ersten Schicht (9) aus Polymermischung(en) größer als 50 % des Elastizitätsmoduls unter Spannung bei 10 % Dehnung der Kalandrierung der Karkassenbewehrungsschicht (2) und vorzugsweise größer als 70 % des Elastizitätsmoduls unter Spannung bei 10 % Dehnung der Kalandrierung der Karkassenbewehrungsschicht (2) ist.

11. Reifen (1) nach einem der vorhergehenden Ansprüche, wobei sich der umgeschlagene Teil (7) der Karkassenbewehrungsschicht axial außen mit einer zweiten Schicht (11) aus Polymermischung in Kontakt befindet, **dadurch gekennzeichnet, dass** der Elastizitätsmodul unter Spannung bei 10 % Dehnung der zweiten Schicht (11) aus Polymermischung kleiner als 150 % des Elastizitätsmoduls unter Spannung bei 10 % Dehnung der Kalandrierung der Karkassenbewehrungsschicht (2) ist, vorzugsweise streng kleiner als 25 MPa und, noch stärker bevorzugt, größer als der Elastizitätsmodul unter Spannung bei 10 % Dehnung der ersten Schicht (9) aus Polymermischung, wobei die Messung des Elastizitätsmoduls unter Zugbeanspruchung nach der Norm AFNOR-NFT-46002 vom September 1988 durchgeführt wird.

12. Reifen (1) nach einem der vorhergehenden Ansprüche, **dadurch gekennzeichnet, dass** in jeder Meridianebene auf einer Länge des umgeschlagenen Teils (7) der Karkassenbewehrungsschicht, die radial zwischen dem Ende (8) des umgeschlagenen Teils der Karkassenbewehrungsschicht und einem Punkt begrenzt ist, der sich in einem Abstand von dem radial innersten Punkt (A) des dem Wulstkern (4) umbeschriebenen Kreises (T) befindet, der 65 % des Abstands ($d_R$) zwischen dem Ende (8) des umgeschlagenen Teils (7) der Karkassenbewehrungsschicht und dem radial innersten Punkt (A) des dem Wulstkern (4) umbeschriebenen Kreises (T) beträgt, jeder Punkt des umgeschlagenen Teils (7) der Karkassenbewehrungsschicht sich in einem Abstand von der Außenfläche (S) des Reifens befindet, der kleiner als 10 mm ist.

**Claims**

1. Tyre (1) mounted on a nominal drop-centre rim (J) of the 15° drop centre type, and inflated to its nominal pressure, comprising a radial carcass reinforcement (2) made up of a single carcass reinforcing layer formed of reinforcing elements, the said tyre comprising a crown reinforcement (5), itself capped radially by a tread, the said tread being connected to two beads via two sidewalls, the layer of reinforcing elements of the carcass reinforcement being anchored in each of the beads by being turned up around a bead wire (4a, 4b) to form a main part of the carcass reinforcement layer extending from one bead wire to the other and a turn-up (7) of the carcass reinforcement layer in each of the beads, the said turn-up (7) of the carcass reinforcement layer being separated from the main part of the carcass reinforcement layer by a first layer (9) of polymer compound(s) extending radially from the bead wire (4a, 4b) as far as at least the end (8) of the turn-up (7) of the carcass reinforcement layer, in a meridian cross section of the said tyre:

   - the turn-up (7) of the carcass reinforcement layer and the main part of the carcass reinforcement layer being the only layers of reinforcing elements, of which the elongation at break is less than 6%, that are present in a sidewall region making up at least 90% of the surface area of the sidewall comprised radially between the end (8) of the turn-up (7) of the carcass reinforcement layer and the radially outermost point (B) of the bead wire, the measurement of elongation at break being realised measured under tension according to standard ISO 6892, 1984,
   - the distance ($d_R$) between the end (8) of the turn-up (7) of the carcass reinforcement layer and the radially innermost point (A) of the circle circumscribed on the bead wire being between 45 and 90% of the distance (dz) between the axially outermost point (Z) of the main part of the carcass reinforcement layer and the radially innermost point (A) of the circle (T) circumscribed on the bead wire (4),
   - radially towards the outside, starting from a point (C) of the turn-up (7) of the carcass reinforcement layer that is situated at a distance (dc) from the radially innermost point (A) of the circle (T) circumscribed on the bead wire (4) of between 30 and 55% of the distance ($d_R$) between the end (8) of the turn-up (7) of the carcass reinforcement layer and the radially innermost point (A) of the circle (T) circumscribed on the bead wire (4), the turn-up (7) of the carcass reinforcement layer and the main part of the carcass reinforcement layer being coupled to form a coupling zone along a length of between 15 and 65% of the distance ($d_R$) between the end (8) of the turn-up (7) of the carcass reinforcement layer and the radially innermost point (A) of the circle (T) circumscribed on the bead wire (4), and being then decoupled by the first layer (9) of polymer compound(s), **characterized in that**
   - any point on the profile of the exterior surface S of the tyre, between a first point F, itself defined by the intersection of an axially orientated straight line passing through the radially outermost point of the bead wire and the exterior surface of the tyre, and a second point E, which is the axially outermost point of the tyre, lies at a distance less than 2.5 mm from a spline P connecting the said first and second points F and E, the spline P being a parametrized curve of which the coordinates in the direct frame of reference of origin $p_1$ and of which the first axis is formed by the straight line passing through the points $p_1$ and $p_2$ are given by:

$$[ K * ( (-2u^3+3u^2) + t_{Fp} * (u^3-2u^2+u)*\cos(\alpha_F) + t_{Ep}*(u^3-u^2)*\cos(\alpha_E) ) ,$$

$$K * ( t_{Fp} * (u^3-2u^2+u)*\sin(\alpha_F) + t_{Ep}*(u^3-u^2)*\sin(\alpha_E) ) ]$$

   where u, on a relative curved abscissa, lies in the interval [0, 1],
   - the direction of the tangent $T_{PF}$ of the said spline P being given by the straight line passing through the said first point F and making with the radial direction an angle $\alpha_F$ of between -3° and +3° and smaller than the angle formed by the straight line [EF] and the radial direction,
   - the direction of the tangent $T_{PE}$ of the said spline P being given by the straight line passing through the said second point E and making with the radial direction an angle $\alpha_E$ of between 0° and +5° and smaller than the angle formed by the straight line [EF] and the radial direction,
   - the tension or scale factor $t_{Fp}$ on the tangent $T_{PF}$, lying in the interval [0.8, 1.3],
   - the tension or scale factor $t_{Ep}$ on the tangent $T_{PE}$, lying in the interval [1.5*$t_{Fp}$, 2.3*$t_{Fp}$],
   - the said spline P and the straight line [EF] has a single point of intersection N, distinct from the points E and F, the said point of intersection N being radially on the inside of the single point of inflection M of the said spline P,
   - the single point of inflection M of the said spline P is at a radial distance from the point F of between 25 and 50% of the radial distance between the points E and F,
   - at least 95% of the points of the spline P are axially on the inside of the points of a spline W defined between the points E and I, the said point I being defined by the axially outermost point of contact of the tyre with the rim J,
- the direction of the tangent $T_{WE}$ of the said spline W being given by the straight line passing through the said first point E and making with the radial direction an angle $\alpha_{WE}$ equal to 0°,
- the direction of the tangent $T_{WI}$ of the said spline W being given by the straight line tangential to the rim flange of the rim J at the point I,
- the tensions or scale factors $t_{Iw}$ and $t_{Ew}$ on the tangents $T_{WI}$ and $T_{WE}$ being equal to 1,
- the maximum axial distance between the spline P and the spline W is greater than 5% of the radial distance between the points E and F,
- the surface area delimited by the spline P, by the spline W, by the axial straight line passing through the end of the turn-up of the carcass reinforcement layer and by the axial straight line passing through the point F is greater than three times the surface area of a rectangle having one side the length of the segment connecting the points E and F, and the other side being of unit length.

2. Tyre (1) according to Claim 1, **characterized in that** any point on the profile of the exterior surface (S) of the tyre between the said first and second points (F) and (E) is at a distance less than 1.25 mm from the spline (P) connecting the said first and second points (F) and (E).

3. Tyre (1) according to Claim 1 or 2, **characterized in that** the direction of the tangent $T_{PF}$ of the spline P, which is given by the straight line passing through the first point F, makes with the radial direction an angle $\alpha_F$ of between -1° and +1°.

4. Tyre (1) according to one of the preceding claims, **characterized in that** the maximum axial distance between the spline P and the spline W is greater than 10% of the radial distance between the points E and F.

5. Tyre (1) according to one of the preceding claims, **characterized in that** the value of the surface area delimited by the spline P, by the spline W, by the axial straight line passing through the end (8) of the turn-up (7) of the carcass reinforcement layer (2) and by the axial straight line passing through the point F is greater than six times the surface area of a rectangle having one side the length of the segment connecting the points E and F, and the other side being of unit length.

6. Tyre (1) according to one of the preceding claims, **characterized in that** the decoupling length is between 5 and 40% of the distance ($d_R$) between the end (8) of the turn-up (7) of the carcass reinforcement and the radially innermost point (A) of the circle (T) circumscribed on the bead wire (4), and is preferably between 15 and 35% of the distance ($d_R$) between the end (8) of the turn-up (7) of the carcass reinforcement and the radially innermost point (A) of the circle (T) circumscribed on the bead wire (4).

7. Tyre (1) according to one of the preceding claims, **characterized in that** the turn-up (7) of the carcass reinforcement and the carcass reinforcement are coupled along a length of between 25 and 40% of the distance ($d_R$) between the end (8) of the turn-up (7) of the carcass reinforcement and the radially innermost point (A) of the circle (T) circumscribed on the bead wire (4).

8. Tyre (1) according to one of the preceding claims, **characterized in that** the tensile elastic modulus at 10% elongation of the skim layers of the carcass reinforcement layer (2) is between 4 and 16 MPa and preferably between 8 and 12 MPa, the measure of the elastic modulus being realised under tension in accordance with standard AFNOR-NFT-46002 of September 1988.

9. Tyre (1) according to one of the preceding claims, **characterized in that** the tensile elastic modulus at 10% elongation of the first layer (9) of polymer compound(s) is less than or equal to the tensile elastic modulus at 10% elongation of the skim compounds of the carcass reinforcement layer (2).

10. Tyre (1) according to one of the preceding claims, **characterized in that** the tensile elastic modulus at 10% elongation of the first layer (9) of polymer compound(s) is greater than 50% of the tensile elastic modulus at 10% elongation of the skim compounds of the carcass reinforcement layer (2) and preferably is greater than 70% of the tensile elastic modulus at 10% elongation of the skim compounds of the carcass reinforcement layer (2).

11. Tyre (1) according to one of the preceding claims, the said turn-up (7) of the carcass reinforcement layer being, axially towards the outside, in contact with a second layer (11) of polymer compound, **characterized in that** the tensile elastic modulus at 10% elongation of the second layer (11) of polymer compound is less than 150% of the tensile elastic modulus at 10% elongation of the skim compounds of the carcass reinforcement layer (2), preferably strictly less than 25 MPa and preferably also greater than the tensile elastic modulus at 10% elongation of the first layer (9) of polymer compound, the measure of the elastic modulus being realised under tension in accordance with standard AFNOR-NFT-46002 of September 1988.

12. Tyre (1) according to one of the preceding claims, **characterized in that,** in any meridian plane, along a length of the turn-up (7) of the carcass reinforcement layer that is delimited radially between the end (8) of the said turn-up of the carcass reinforcement layer and a point situated at a distance from the radially innermost point (A) of the circle (T) circumscribed on the bead wire (4) that is equal to 65% of the distance ($d_R$) between the end (8) of the turn-up (7) of the carcass reinforcement layer and the radially innermost point (A) of the circle (T) circumscribed on the bead wire (4), every point of the turn-up (7) of the carcass reinforcement layer is at a distance from the exterior surface (S) of the tyre of less than 10 mm.

**Figure 1**

**Figure 2**

**Figure 3**

E

Z

2

11

9

8

T

$d_Z$

4

18

7

$d_R$

A

**Figure 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2779387
- US 20060000199 A
- EP 1393931 A1
- EP 2949483 A1
- FR 2415016 A1

**Littérature non-brevet citée dans la description**

- An improved method of using equilibrium profile to design radial tires. *Journal of Advanced Mechanical Design, Systems, and Manufacturing,* 2015, vol. 9 (2
- **S. KIRKPATRICK ; C. D. GELATT ; M. P. VECCHI.** Optimization by Simulated Annealing. *Science,* 1983, vol. 220, 671-680